(19) Europäisches Patentamt
European Patent Office
Office européen des brevets

(11) EP 0 666 540 B1

(12) **EUROPÄISCHE PATENTSCHRIFT**

(45) Veröffentlichungstag und Bekanntmachung des Hinweises auf die Patenterteilung:
**23.04.1997 Patentblatt 1997/17**

(51) Int Cl.6: **G06F 13/42**

(21) Anmeldenummer: **94118933.4**

(22) Anmeldetag: **01.12.1994**

(54) **Vorrichtung und Verfahren zur Speicherung und Wiedergabe von digitalen Daten**

Method and apparatus to record and playback digital data

Méthode et dispositif d'enregistrement et de reproduction de données numériques

(84) Benannte Vertragsstaaten:
**AT BE CH DE ES FR GB IT LI NL SE**

(30) Priorität: **02.02.1994 DE 4402901**

(43) Veröffentlichungstag der Anmeldung:
**09.08.1995 Patentblatt 1995/32**

(73) Patentinhaber:
• **Alcatel SEL Aktiengesellschaft**
**D-70435 Stuttgart (DE)**
Benannte Vertragsstaaten:
**DE**
• **ALCATEL N.V.**
**NL-1077 XX Amsterdam (NL)**
Benannte Vertragsstaaten:
**BE CH ES FR GB IT LI NL SE AT**

(72) Erfinder: **Kopp, Dieter**
**D-71282 Hemmingen (DE)**

(74) Vertreter: **Knecht, Ulrich Karl, Dipl.-Ing. et al**
**Alcatel Alsthom**
**Intellectual Property Department,**
**Postfach 30 09 29**
**70449 Stuttgart (DE)**

(56) Entgegenhaltungen:
**EP-A- 0 557 968      GB-A- 2 259 379**
**US-A- 4 970 692      US-A- 5 262 991**

**Beschreibung**

Die Erfindung betrifft eine Vorrichtung und ein Verfahren welche bzw. welches zur Speicherung und Wiedergabe digitaler Daten, insbesondere Sprachdaten dient.

Aus dem Stand der Technik ist eine Speicherung und eine Wiedergabe von digitalen Daten für digitale Anrufbeantworter als breites Anwendungsgebiet bekannt.

Hierbei werden üblicherweise RAM-Speicher verwendet, wie dies in der Offenlegungsschrift DE 36 32 478 A1 erläutert wird.

Speziell bei digitalen Anrufbeantwortern finden zur Speicherung sogenannte ARAMs (Audio Random-Access Memory) oder DRAMs (Dynamic Random-Access Memory) (siehe "Tritel Guarda, das Telefon mit digitalem Anrufbeantworter"; ascom, Technische Mitteilungen; 1,91) oder SRAMs (Static Random-Access Memory) Verwendung. Bei Verwendung dieser Speicherbausteine besteht zusätzlich die Anforderung eine unterbrechungsfreie Stromversorgung zu ermöglichen, damit ein Datenerhalt in den Speicherbausteinen ermöglicht werden kann. Bei Ausfall einer externen Stromversorgung muß deshalb ein Datenerhalt z.B. unter Zuhilfenahme einer Batterie erfolgen. Die Verwendung einer Batterie erhöht aber die Kosten eines digitalen Anrufbeantworters, ebenso wie die Größe und das Gewicht.

Aus dem Stand der Technik der US-Patentschrift 5,262,991 ist eine Vorrichtung zur Datenübertragung zwischen einer elektronischen Vorrichtung, wie z. B. einem μ-Prozessor und Speichermedien, wie z. B. EEPROMS, bekannt. In einer Ausgestaltung werden die Adresseingänge, A0 - A14 des EEPROMS, mit entsprechenden Adressleitungen des μ-Prozessors verbunden. Die Dateneingänge D7 - D0 werden mit gemultiplexten Adress/Daten-Leitungen des μ-Prozessors verbunden. Ebenfalls vorgesehen ist ein sogenannter Datenpfadkontroller, über den die gemultiplexten Adress/Daten-Leitungen laufen, und der Datenpfadkontroller sorgt dafür, daß aus den gemultiplexten Adress/Datenbits, die von dem μ-Prozessor kommen, gegebenenfalls lediglich die Datenbits weitergeführt werden oder gegebenenfalls lediglich die Adressbits.

Hierbei muß also ein weiteres Element, nämlich der Datenpfadkontroller vorgesehen werden, um bereits gemulitplexte Adress/Datenbits des μ-Prozessors zu verarbeiten. Dies ist relativ aufwendig und bedarf eines hohen logistischen Aufwandes.

Ein weiterer Stand der Technik GB-A-2 259 379 beschreibt ein digitales Datenspeichersystem. Das System besteht unter anderem aus einem digitalen Signalprozessor (DSP), Speicher zum Schreiben und Auslesen von Daten und einem Mittel, welches zwischen dem DSP und dem Speicher vorgesehen ist, zum Treiben und Buffern der Daten. Der Speicher kann beispielsweise ein EEPROM sein.

Hierbei ist demgemäß ein Mittel zwischen DSP und EEPROM vorgesehen. Eine direkte Verbindung zwischen dem DSP und dem EEPROM ist nicht möglich.

Der Erfindung liegt die Aufgabe zugrunde, eine Vorrichtung und ein Verfahren vorzusehen, das die Nachteile des Datenverlustes bei Ausfall der Stromversorgung vermeidet und das mit geringem Hardwareaufwand realisiert werden kann.

Die Aufgabe wird erfindungsgemäß gelöst durch die Lehre des ersten und sechsten Patentanspruchs.

Vorzugsweise können dafür sogenannte EEPROMs (Electrically Erasable and Programmable Read Only Memory) verwendet werden, die ebenfalls unter der Bezeichung E$^2$PROM bekannt sind. Diese Halbleiterbausteine finden Verwendung in Schaltungsanordnungen bei denen ein nichtflüchtiger Speicher eingesetzt werden soll.

Ebenso sind neuerdings sogenannte Flash-EEPROMs bekannt, die die Eigenschaft besitzen mittels eines einfachen Steuersignals löschbaren und sofort wieder beschreibbaren Speicherplatz zur Verfügung zu stellen. Flash-EEPROMs der neueren Generation sind in einem Block wiederprogrammierbar. Hierbei kann die Blockgröße zwischen 64 Bytes bis 64 kBytes betragen, je nach Anwendung. Durch die spezielle Architektur der Flash-EEPROMs können diese sowohl für Programmspeicheranwendungen als auch für Massenspeicheranwendungen eingesetzt werden ("Flash-memory ICs redefine program and data storage for portable applications"; Gary Legg; aus: EDN; April 15, 1993; S. 71-74).

Vorteilhafte Anwendung können die Flash-EEPROMs zur Speicherung digitaler Daten finden, da sie hier eine kostengünstige Alternative zu bekannten Speicherbausteinen, wie den zuvor beschriebenen DRAMs, darstellen.

Weitere vorteilhafte Ausgestaltungen sind den Unteransprüchen 2 bis 5 und 7 zu entnehmen.

Nach Unteranspruch 3 wird ein Flash-EEPROM als Festwertspeicher für die Speicherung digitaler Daten verwendet. Nach Unteranspruch 4 wird ein Festwertspeicher in einer Blockstruktur für Massenspeicheranwendungen eingesetzt.

Nach Unteranspruch 5 sind die zu speichernden und wiederzugebenden digitalen Daten Sprachdaten wie sie beispielsweise in der Sprachspeicherung für digitale Anrufbeantworter vorliegen.

Im folgenden wird die Erfindung anhand der Figuren näher erläutert.

Folgende Figuren zeigen:

Fig. 1    Blockschaltbild einer Vorrichtung nach Anspruch 1,

Fig. 2    Schematische Darstellung der Speicheraufteilung.

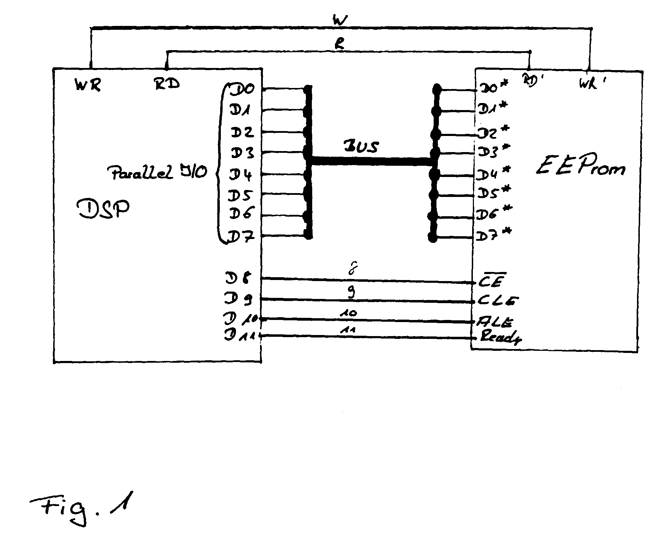

Im folgenden wird ein Ausführungsbeispiel anhand von Figur 1 erläutert.

Eine Vorrichtung zur Speicherung und Wiedergabe von digitalen Daten besteht aus einem digitalen Signalprozessor DSP und aus einem elektrisch löschbaren, programmierbaren Festwertspeicher EEProm. Vorzugsweise wird ein Festwertspeicher in Blockstruktur für Massenspeicheranwendungen eingesetzt. Der digitale Signalprozessor DSP hat eine Vielzahl von parallelen Ein/Ausgabeschnittstellen D0-D7 und weitere parallele Ein/Ausgabeschnittstellen D8-D11. Zusätzlich hat der digitale Signalprozessor DSP noch einen Schreibfreigabeanschluß WR und einen Lesefreigabeanschluß RR. Die weiteren Anschlüsse die sich an jedem digitalen Signalprozessor befinden sind hier der Übersichtlichkeit halber nicht aufgeführt, sind aber in Datenbüchern die zum Stand der Technik zählen aufgeführt und erläutert.

Der elektrisch löschbare, programmierbare Festwertspeicher EEProm hat eine Vielzahl von parallelen Ein/Ausgabeschnittstellen D0*-D7* und parallele Anschlüsse CE, CLE, ALE, Ready. Zusätzlich hat der Festwertspeicher einen Schreibfreigabeanschluß WR' und einen Lesefreigabeanschluß RR'. Auch für den Festwertspeicher EEProm sind die weiteren Anschlüsse der Übersichtlichkeit halber nicht aufgeführt, sondern es wurden nur die für die hier dargestellte Erfindung wesentlichen Anschlüsse aufgeführt.

Bei der erfindungsgemäßen Vorrichtung ist der Schreibfreigabeanschluß WR' des Festwertspeichers EEProm über eine erste Leitung W mit dem Schreibfreigabeanschluß WR des digitalen Signalprozessors DSP verbunden. Ebenso ist der Lesefreigabeanschluß RR' des Festwertspeichers EEProm über eine zweite Leitung R mit dem Lesefreigabeanschluß RR des digitalen Signalprozessors DSP verbunden.

Die parallelen Ein/Ausgabeschnittstellen D0-D7 des digitalen Signalprozessors DSP sind alle mit einem gemeinsamen Bus BUS verbunden, welcher eine Verbindung zu den parallelen Ein/Ausgabeschnittstellen D0*-D7* des Festwertspeichers EEProm herstellt, die ebenfalls alle mit dem Bus BUS verbunden sind.

Die weiteren Ein/Ausgabeschnittstellen D8-D11 sind jeweils über Steuerleitungen 8, 9, 10, 11 mit weiteren Anschlüssen CE, CLE, ALE, Ready verbunden. Explizit ist hierbei die Ein/Ausgabeschnittstelle D8 über die Steuerleitung 8 mit dem Anschluß CE verbunden. Dieser Anschluß CE ist ein Chipfreigabeanschluß (Chip enable). Die Ein/Ausgabeschnittstelle D9 ist über die Steuerleitung 9 mit dem Anschluß CLE verbunden, der ein Kommandosignalfreigabeanschluß (Command latch enable) ist. Die Ein/Ausgabeschnittstelle D10 ist über die Steuerleitung 10 mit dem Anschluß ALE verbunden, der ein Adressensignalfreigabeanschluß (Address latch enable) ist. Die Ein/Ausgabeschnittstelle D11 ist über die Signalleitung 11 mit dem Anschluß Ready verbunden, der ein Freigabeanschluß ist.

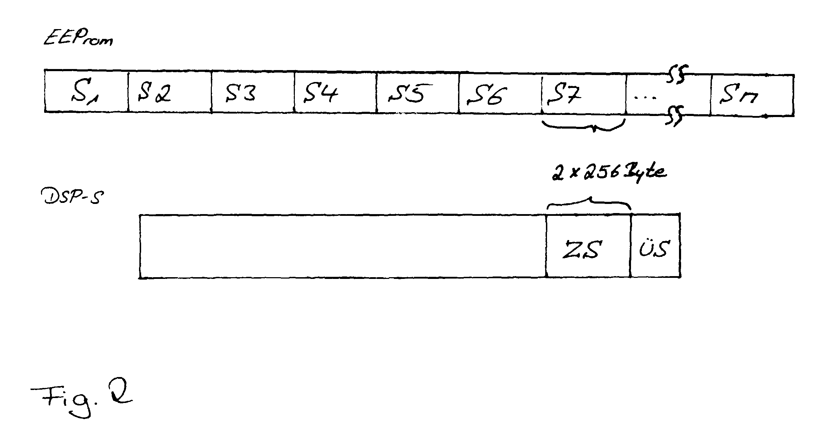

Im folgenden wird anhand von Figur 2 die Vorrichtung nach Anspruch 2 erläutert.

Eine erfindungsgemäße Vorrichtung zur Speicherung und Wiedergabe von digitalen Signalen setzt sich aus einem digitalen Signalprozessor DSP und einem elektrisch löschbaren, programmierbaren Festwertspeicher EEProm zusammen. Der digitale Signalprozessor DSP und der Festwertspeicher EEProm sind über Signal- oder Steuerleitungen miteinander verbunden. Der elektrisch löschbare, programmierbare Festwertspeicher EEProm ist in eine Vielzahl von Segmente $S_1$ bis $S_n$ aufgeteilt, für n gleich einer geraden Zahl größer 1. Die Segmente $S_1$ bis $S_n$ haben eine festgelegte Größe, beispielsweise 2x256 Byte = 512 Byte. In einem Speicher des digitalen Signalprozessors DSP wird ein Zwischenspeicher ZS definiert, der der Größe nach genau der Größe eines Segmentes entspricht, also beispielsweise 512 Byte groß ist. Ebenso wird ein Überhangspeicher ÜS definiert, dessen Funktion später noch eingehend erläutert wird. In dem Speicher des digitalen Signalprozessors DSP werden ebenfalls Softwaretreiber und Kodier- und Dekodiersoftware implementiert. Deren Funktion wird ebenfalls später erläutert.

Im folgenden wird ein Verfahren zur Speicherung digitaler Daten erläutert.

Dieses Verfahren speichert digitale Daten mittels eines digitalen Signalprozessors DSP, der die bereits vorher erläuterten Eigenschaften und Anschlußbelegungen aufweist und mittels eines elektrisch löschbaren, programmierbaren Festwertspeichers EEProm, der ebenfalls die bereits zuvor erläuterten Anschlußbelegungen aufweist. Ein Speicher DSP-S des digitalen Signalprozessors DSP ist in einen Zwischenspeicher ZS und in einen Überhangspeicher ÜS aufgeteilt, wie auch bereits in Figur 2 gezeigt wurde. Bei dem Verfahren zur Speicherung werden zuerst die digitalen Daten in den Zwischenspeicher ZS des Speichers DSP-S des digitalen Signalprozessors geschrieben. Der Festwertspeicher ist, wie bereits anhand von Figur 2 erläutert wurde, in eine Vielzahl von Segmente $S_1$ bis $S_n$ aufgeteilt. Die Segmente haben eine vordefinierte festgelegte Größe. Die Größe des Zwischenspeichers entspricht ebenfalls der Größe der Segmente $S_1$ bis $S_n$. Zur Speicherung werden die im Zwischenspeicher ZS zwischengespeicherten digitalen Daten mittels eines Softwaretreibers in ein ausgewähltes Segment $S_1$ bis $S_n$ des Festwertspeichers EEProm geschrieben.

Das Auslesen und Einschreiben der Daten aus bzw. in den Zwischenspeicher erfolgt mittels einer Dekodier/Kodiersoftware die in dem digitalen Signalprozessor implementiert ist.

Während dieses Vorganges können weitere Daten für den Zwischenspeicher ZS anfallen. Die in dieser Zwischenzeit anfallenden Daten werden, um einen Datenverlust zu vermeiden und weil der Zwischenspeicher nicht schreibbereit ist, in den Überhangspeicher ÜS geschrieben. Der Überhangspeicher ist ebenfalls ein Teil des Speichers DSP-S des digitalen Signalprozessors DSP. Wenn der Schreibvorgang zwischen Zwischenspeicher ZS und Festwertspeicher EEProm beendet ist, werden die im Überhangspeicher befindlichen Daten in den Zwischenspeicher kopiert.

Zur Wiedergabe der gespeicherten digitalen Daten wird in einem ersten Schritt das zum Auslesen ausgewählte Segment des Festwertspeichers EEProm adressiert. Ebenso können natürlich mehrere ausgewählte Segmente adressiert werden.

In einem weiteren Schritt werden die Daten der so adressierten Segmente ausgelesen und in den Zwischenspeicher ZS geladen, um danach zur Wiedergabe gebracht werden zu können. Die Softwaretreiber haben die Aufgabe dafür zu sorgen, daß immer Daten in dem Zwischenspeicher ZS geschrieben sind, um von der Dekodiersoftware ausgelesen zu werden.

**Patentansprüche**

1. Vorrichtung zur Speicherung und Wiedergabe von digitalen Daten, mit einem digitalen Signalprozessor (DSP) und mit einem elektrisch löschbaren, programmierbaren Festwertspeicher (EEProm), der in eine Vielzahl von Segmente (S1 - Sn) aufgeteilt ist und bei der von einer Vielzahl von parallelen Ein/Ausgabeschnittstellen (DO*-D7*) des Festwertspeichers aus, über einen Daten/Adressbus (BUS) mit parallelen Ein/Ausgabeschnittstellen (D0-D7) des digitalen Signalprozessors (DSP) verbunden ist, und bei der Anschlüsse ($\overline{CE}$, CLE, ALE, Ready) des Festwertspeichers (EEProm) über Steuerleitungen (8-11) mit weiteren Ein/Ausgabeschnittstellen (D8-D11) des digitalen Signalprozessors (DSP) verbunden sind, und bei der über eine erste Leitung (W) ein Schreibfreigabeanschluß (WR) und über eine zweite Leitung (R) ein Lesefreigabeanschluß (RD) des digitalen Signalprozessors (DSP) mit einem Schreib (WR')- bzw. einem Lesefreigabeanschluß (RD') des Festwertspeichers verbunden sind und bei der in dem digitalen Signalprozessor (DSP) ein Zwischenspeicher (ZS) in der Größe eines Segmentes des Festwertspeichers (EEProm) definiert wird, und bei der Softwaretreiber und Kodier- und Dekodiersoftware in dem digitalen Signalprozessor (DSP) implementiert sind.

2. Vorrichtung nach nach Anspruch 1, bei der in dem digitalen Signalprozessor (DSP) ein Überhangspeicher (OS) definiert wird.

3. Vorrichtung nach Anspruch 1 oder 2, bei der der elektrisch löschbare, programmierbare Festwertspeicher (EEProm) ein Flash-EEPROM ist.

4. Vorrichtung nach Anspruch 1, bei der der Festwertspeicher ein Festwertspeicher in Blockstruktur für Massenspeicheranwendungen ist.

5. Vorrichtung nach einem der Ansprüche 1 bis 4, bei der die digitalen Daten Sprachdaten sind.

6. Verfahren zur Speicherung von digitalen Daten mittels eines digitalen Signalprozessors (DSP) und eines elektrisch löschbaren, programmierbaren Festwertspeichers (EEProm), bei dem die digitalen Daten in einen Zwischenspeicher (ZS) eines Speichers (DSP-S) des digitalen Signalprozessors (DSP) geschrieben werden, die digitalen Daten des Zwischenspeichers (ZS) mittels eines Softwaretreibers in ein ausgewähltes Segment des Festwertspeichers (EEProm) geschrieben werden, und bei dem Daten, die während des Schreibvorganges anfallen in einen Überhangspeicher (ÜS) des Speichers (DSP-S) in dem digitalen Signalprozessor (DSP) geschrieben werden, und nach dem Schreibvorgang in den Zwischenspeicher (ZS) kopiert werden.

7. Verfahren nach Anspruch 6, bei dem zur Wiedergabe von zuvor gespeicherten digitalen Daten das ausgewählte Segment des Festwertspeichers (EEProm) adressiert wird, die in den ausgewählten Segmenten befindlichen Daten ausgelesen und in den Zwischenspeicher (ZS) geladen werden.

**Claims**

1. Device for storing and reproducing digital data, with a digital signal processor (DSP) and with an electrically erasable, programmable read-only-memory (EEProm) which is partitioned into a number of segments (S1 - Sn), with a number of parallel input/output interfaces (D0*-D7*) of the read-only-memory which are connected via a data/address bus (BUS) to parallel input/output interfaces (D0-D7) of the digital signal processor (DSP), and wherein the connections (CE, CLE, ALE, Ready) of the read-only-memory (EEProm) are connected by control lines (8-11) to other input/output interfaces (D8-D11) of the digital signal processor (DSP), and wherein a write enable connection (WR) is connected by a first line (W) and a read enable connection (RD) of the digital signal processor (DSP) is connected by a second line (R) respectively to a write enable (WR') or a read enable (RD') connection of the read-only-memory, and where a buffer (ZS) is defined in the digital processor (DSP) according to the size of a segment of the read-only-memory (EEProm), and where the software driver and the encoding and decoding software are implemented in the digital processor (DSP).

2. Device as claimed in claim 1, wherein an overflow storage (OS) is defined in the digital processor (DSP).

3. Device as claimed in claim 1 or 2, wherein the electrically erasable, programmable read-only-memory (EEProm) is a flash EEPROM.

4. Device as claimed in claim 1, in which the read-only-memory is a block-structured read-only-memory for mass storage applications.

5. Device as claimed in one of claims 1 to 4, in which the digital data are speech data.

6. Method for storing digital data by means of a digital signal processor (DSP) and an electrically erasable, programmable read-only-memory (EEProm), wherein the digital data are written into a buffer (ZS) of a memory (DSP-S) in the digital signal processor (DSP), where the digital data of the buffer (ZS) are written by means of a software driver into a selected segment of the read-only-memory (EEProm), and wherein the data produced during the writing process are written into an overflow memory (ÜS) of memory (DSP-S) in the digital signal processor (DSP), and are copied into the buffer (ZS) after the writing process.

7. Method as claimed in claim 6 wherein, to reproduce previously stored digital data, the selected segment of the read-only-memory (EEProm) is addressed, and the data contained in the selected segments are read and loaded into the buffer (ZS).

**Revendications**

1. Dispositif d'enregistrement et de reproduction de données numériques, avec un processeur numérique de signaux (DSP) et une mémoire fixe programmable électriquement effaçable (EEPROM) divisée en un grand nombre de segments ($S_1$ - $S_n$) et pour lequel un grand nombre d'interfaces parallèles d'entrée et de sortie (DO\*-D7\*) de la mémoire fixe est, par l'intermédiaire d'un bus de donnée d'adresse (BUS), relié à des interfaces parallèles d'entrée et de sortie (DO-D7) du processeur numérique de signaux (DSP), et pour lequel des raccords (CE, CLE, ALE, Ready) de la mémoire fixe (EEPROM) sont reliés par l'intermédiaire de lignes de commande (8-11) avec d'autres interfaces d'entrée et de sortie (D8-D11) du processeur numérique de signaux (DSP), et pour lequel un raccord d'autorisation d'écriture (WR), par l'intermédiaire d'une première conduite (W), et un raccord d'autorisation de lecture (RD), par l'intermédiaire d'une seconde conduite (R), du processeur numérique de signaux (DSP) sont reliés à un raccord d'autorisation d'écriture (WR') ou un raccord d'autorisation de lecture (RD') de la mémoire fixe, et pour lequel, dans le processeur numérique de signaux (DSP), une mémoire intermédiaire (ZS) de la grandeur d'un segment de la mémoire fixe (EEPROM) est définie, et pour lequel des gestionnaires logiciels et un logiciel de codage et de décodage sont implémentés dans le processeur numérique de signaux (DSP).

2. Dispositif conformément à la spécification 1, pour lequel une mémoire de recouvrement (ÜS) est définie dans le processeur numérique de signaux (DSP).

3. Dispositif conformément à la spécification 1 ou 2, pour lequel la mémoire fixe programmable électriquement effaçable (EEPROM) est un Flash-EEPROM.

4. Dispositif conformément à la spécification 1, pour lequel la mémoire fixe est une mémoire fixe à structure de blocs pour des applications de mémoire de masse.

5. Dispositif conformément à l'une des spécifications 1 à 4, pour lequel les données numériques sont des données vocales.

6. Procédé d'enregistrement de données numériques à l'aide d'un processeur numérique de signaux (DSP) et d'une mémoire fixe programmable électriquement effaçable (EEPROM), pour lequel les données numériques sont écrites dans une mémoire intermédiaire (ZS) d'une mémoire (DSP-S) du processeur numérique de signaux (DSP), les données numériques de la mémoire intermédiaire (ZS) sont écrites à l'aide d'un gestionnaire logiciel dans un segment choisi dans la mémoire fixe (EEPROM), et pour lequel des données arrivant pendant l'opération d'écriture sont stockées dans une mémoire de recouvrement (ÜS) de la mémoire (DSP-S) du processeur numérique de signaux (DSP) pour être copiées, après la fin de l'opération d'écriture, dans la mémoire intermédiaire (ZS).

7. Procédé conformément à la spécification 6 pour lequel, pour la reproduction de données numériques auparavant mises en mémoire, le segment choisi dans la mémoire fixe (EEPROM) est adressé, puis les données se trouvant dans les segments sélectionnés sont lues et chargées dans la mémoire intermédiaire (ZS).

Fig. 1

EEProm

| $S_1$ | $S_2$ | $S_3$ | $S_4$ | $S_5$ | $S_6$ | $S_7$ | ... | $S_n$ |

$2 \times 256$ Byte

DSP-S

| | ZS | ÜS |

Fig. 2